# EUROPÄISCHE PATENTANMELDUNG

(11) **EP 0 588 770 A1**
(43) Veröffentlichungstag der Anmeldung: **23.03.1994**
(21) Anmeldenummer: 93810642.4
(22) Anmeldetag: 09.09.1993
(51) Int. Cl.: B01D 46/26, B01D 33/073, F01N 3/02

(54) **Verfahren zum Filtrieren eines Mediums und Vorrichtung zur Durchfuehrung des Verfahrens.**

(30) Priorität: 11.09.1992 CH 2860/92
(71) Anmelder: Seiler-Müller, Susanne, CH-4653 Obergösgen (CH); Seiler-Müller, Hanspeter, CH-4653 Obergösgen (CH)
(72) Erfinder: Müller, Roger, CH-4711 Aedermannsdorf (CH)

(57) **Zusammenfassung**

Beim Verfahren zum Filtrieren eines Mediums wird ein hohles Filter verwendet, durch das das Medium strömt. Das Filter (1) ist drehbar angeordnet und wird mit einer Umfangsgeschwindigkeit angetrieben, die mit der Strömungsgeschwindigkeit des ungefähr tangential einströmenden Mediums vergleichbar ist.

Die Filter-Vorrichtung zur Durchführung des Verfahrens weist einen auf das Filter (1) wirkenden Drehantrieb (5) und ein Gebläse (8) zum Befördern des zu reinigenden Mediums auf.

Eine solche Vorrichtung weist eine höhere Abscheidungsrate auf als vorbekannte Filter und die Filter werden viel weniger verschmutzt und müssen daher weniger oft gewechselt werden.

## Beschreibung

Die vorliegende Erfindung bezieht sich auf ein Verfahren zum Filtrieren eines Mediums, mit einem hohlen Filter, durch das das Medium strömt, sowie auf eine Filtervorrichtung zur Durchführung des Verfahrens, wobei hauptsächlich, aber nicht ausschliesslich, das Medium gasförmig ist.

Filter werden in den verschiedensten Bereichen benötigt und eingesetzt, beispielsweise zum Entstauben von Luft in Fabrikationsräumen, Entfernen von Partikeln bei Verbrennungsanlagen oder beispielsweise zum Entfernen von Russ aus Abluft von Motoren. Dabei werden die Filter in Form von Filterelementen oder Filterpatronen in Anlagen eingesetzt, worin sie stationär befestigt werden und derart angeordnet und ausgebildet sind, dass Luft durch sie hindurch strömt. Dies gilt auch für hohle Filterpatronen, beispielsweise gemäss CH-A-665 590, die fest eingebaut werden und durch dessen Wände die zu reinigende Luft strömt und die saubere Luft in der Mitte abgesaugt wird. Bei stationär angeordneten Filtern setzen sich die Schmutzpartikel in den Filterporen fest und, insbesondere bei feuchter Luft, verbacken diese zu einer undurchlässigen Schicht, wodurch das Filterelement schnell unwirksam wird und häufig ausgewechselt werden muss.

Es ist davon ausgehend Aufgabe der vorliegenden Erfindung, ein Verfahren zum Filtrieren eines Mediums anzugeben, das wesentlich wirkungsvoller ist als vorbekannte und das eine längere Lebensdauer der Filterelemente ermöglicht. Ein solches Verfahren sowie eine Vorrichtung zur Durchführung sind in den unabhängigen Ansprüchen definiert. Demgemäss wird das Filter drehbar angeordnet und mit einer Umfangsgeschwindigkeit angetrieben, die der Einströmgeschwindigkeit des zu reinigenden Mediums in etwa entspricht. Bevorzugte Ausführungsbeispiele und Verbesserungen sind in den abhängigen Ansprüchen definiert.

Die Erfindung wird im folgenden anhand einer Zeichnung eines Ausführungsbeispiels näher erläutert, wobei die einzige Figur schematisch eine erfindungsgemässe Filtervorrichtung zeigt.

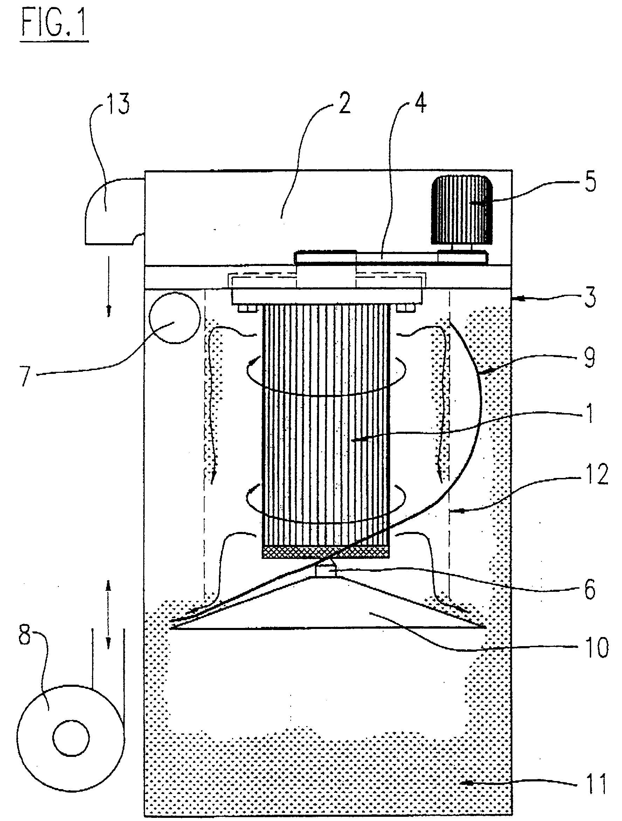

Die schematische Prinzipskizze von Fig. 1 zeigt verschiedene Elemente gesondert, die ebensogut im Gehäuse oder im Gehäusedeckel integriert sein können. Die Filterpatrone 1 ist drehbar am Deckel 2 eines Gehäuses 3 befestigt und über einen Transmissionsriemen 4 von einem Motor 5 angetrieben. Falls es sich um grössere Patronen handelt, und auch um eine grössere Laufruhe zu gewährleisten, ist die Patrone auch unten an einem Lager 6 gehalten und gelagert. Das Gehäuse 3 weist einen Ansaugstutzen mit Oeffnung 7 auf, durch den das vom Gebläse 8 angesaugte Medium in das Gehäuse befördert wird. Selbstverständlich besteht zwischen dem Gebläse 8 und dem Ansaugstutzen 7 eine Verbindung, die jedoch hier nicht eingezeichnet ist. In einem nicht gezeigten Ausführungsbeispiel kann das Gebläse mit dem Ansaugstutzen, das auch mit einem Rohr verbunden sein kann, im Gehäusedeckel 2 integriert sein, wobei das Gebläse z. B. dasjenige eines Staubsaugers sein kann. In einem weiteren, nicht gezeigten Ausführungsbeispiel erfolgt der Antrieb des Filterelementes 1 direkt vom Gebläse 8 über ein Getriebe. Bevorzugt ist auch hier das Gebläse 8 im Gehäuse 2 integriert. Am Gehäusedekkel befindet sich ein Auslass 13 für das gereinigte Medium.

Das zu reinigende Medium, beispielsweise staubige Luft einer Werkhalle, wird wie bereits erwähnt tangential durch die Eingangsöffnung 7 eingeblasen und gelangt zuerst gegen die Gehäusewand und gemäss einer mit 9 angedeuteten Kurve gegen einen Abschirmkegel 10. Dabei wird ein grosser Anteil, bis 95 %, der Partikel abgeschieden, die nach unten in das Bodenteil 11 strömen. Der Abschirmkegel hat einerseits die Aufgabe, zu verhindern, dass die eingeblasene Luft die bereits abgeschiedenen Schmutzpartikel aufwirbelt, und andererseits bewirkt der Abschirmkegel für die eingeblasene Luft eine Beruhigung, wodurch eine Umkehrung der Strömungsrichtung erfolgen und die vorgereinigte Luft durch das Filter abgesaugt werden kann, um vollständig gereinigt zu werden. Bei der Vorabscheidung durch das Einströmen der Luft und Aufprallen auf das Gehäuse werden vorwiegend schwerere und grössere Schmutzpartikel abgeschieden, während die durch das Filter gelangende Luft kleinere Partikel enthält und weniger Schmutzpartikel zum Filter gelangen und dieses weniger verschmutzen. Da jedoch keine vollständige Trennung der Partikel erfolgt, können kleinere Schmutzpartikel an grössere gelangen und sich an diesen ansammeln. Dieser Vorgang, als Agglomeration bekannt, erhöht die Wirksamkeit der gesamten Abscheidung.

Da sich das Filter mit einer relativ grossen Geschwindigkeit dreht, können sich die Schmutzpartikel nicht in den Poren festsetzen, sondern werden vielmehr nach aussen geschleudert, um an der Wand des Gehäuses niederzusinken.

In einem bevorzugten Ausführungsbeispiel kann die Abscheidungsrate und der Gesamtwirkungsgrad einer Filtervorrichtung wesentlich erhöht werden, falls ein mit den gestrichelten Linien 12 angedeuteter Vorabscheider verwendet wird. Je nach Anwendungszweck kann dieser Vorabscheider entweder durchlässig sein, beispielsweise aus Lochblech bestehen oder eine geschlossene Wand aufweisen. Die untere, freie Kante des Vorabscheiders endet in einem gewissen Abstand vom Abschirmkegel, um das Durchströmen der Luft, die durch das Filter gelangt, zu gewährleisten.

Der Vorabscheider kann entweder fest bezüglich des Gehäuses angeordnet sein oder sich mit dem Filter drehen, vorzugsweise mit der gleichen Drehgeschwindigkeit. Die gleiche Drehgeschwindigkeit begünstigt das Erzeugen eines gleichmässigen, laminaren Luftstroms durch das Filter. Wie in der Figur angedeutet, prallen die vom Filter abgeschiedenen Teilchen an die Wand des Vorabscheiders und sinken dort entlang nieder.

Als Filterelemente können die verschiedenartigsten Filter verwendet werden, so die bereits eingangs erwähnte, auf dem Markt erhältliche Filterpatrone mit plissierten Polypropylenwänden und mit Rillen versehen. Es können jedoch auch Filterkerzen oder Schlauchfilter verwendet werden, die auch aus anderen Materialien bestehen können. Insbesondere ist es auch möglich, Keramikfilter zu verwenden, die beispielsweise für das Entrussen der Abgase von Dieselmotoren oder für die Rauchgasentschwefelung oder Heizgasfiltration verwendet werden können. Wie bereits erwähnt, können mit derartigen Filtervorrichtungen nicht nur gasförmige Medien, sondern auch Fluide und Flüssigkeiten gereinigt werden, denn bei sämtlichen Filtrationsvorgängen wird ein Minimum von Schmutzpartikeln am oder im Filter angelagert, da diese durch die Zentrifugalkraft von den Filterwänden weggeschleudert werden.

Für die Regelung der Rotationsgeschwindigkeiten des Filterelementes und gegebenenfalls des Vorabscheiders sind übliche elektronische Regeleinrichtungen in den meisten Fällen ausreichend. Dabei können die Elemente einzeln angetrieben und über eine gemeinsame Steuerung geregelt werden oder über den gleichen Antrieb angetrieben werden. Ausserdem kann der Antrieb entweder deckelseitig oder bodenseitig erfolgen und die Filterelemente einseitig oder beidseitig gelagert sein. Auch können die Filterelemente, der Vorabscheider und das Gehäuse von einem Zylinder abweichende Formen aufweisen.

## Patentansprüche

1. Verfahren zum Filtrieren eines Mediums, mit einem hohlen Filter, durch das das Medium strömt, dadurch gekennzeichnet, dass das Filter (1) drehbar angeordnet ist und mit einer Umfangsgeschwindigkeit angetrieben wird, die mit der Strömungsgeschwindigkeit des ungefähr tangential einströmenden Mediums vergleichbar ist.

2. Filter-Vorrichtung zur Durchführung des Verfahrens nach Anspruch 1, mit einem hohlen Filter, das derart angeordnet ist, dass das zu filtrierende Medium hindurch strömt, dadurch gekennzeichnet, dass die Vorrichtung einen auf das Filter (1) wirkenden Antrieb (5) und ein Gebläse (8) zum Befördern des zu reinigenden Mediums aufweist.

3. Vorrichtung nach Anspruch 2, dadurch gekennzeichnet, dass an dem dem Einlass (7) entgegengesetzten Ende des Filters, zum Schmutzpartikel-Sammelteil (11) des Gehäuses (3) hin, eine konusförmige Abschirmung (10) angeordnet ist.

4. Vorrichtung nach Anspruch 2 oder 3, dadurch gekennzeichnet, dass um das Filter (1) ein Vorabscheider (12) angeordnet ist.

5. Vorrichtung nach Anspruch 4, dadurch gekennzeichnet, dass der Vorabscheider (12) entweder fest oder drehbar, insbesondere mit etwa gleicher Drehzahl wie das Filter (1) angetrieben ist sowie eine geschlossene oder gelochte Wand aufweist, wobei zwischen dem freien Ende des Vorabscheiders und der Abschirmung (10) ein Spalt vorhanden ist.

6. Vorrichtung nach einem der Ansprüche 2 bis 5, dadurch gekennzeichnet, dass das Gebläse (8), der Auslass (13) sowie der oder die Antriebe (5) im Gehäuse-Deckel (2) angeordnet sind.

7. Vorrichtung nach einem der Ansprüche 2 bis 6, dadurch gekennzeichnet, dass das Filter eine Patrone, ein Schlauch, eine Filterkerze, ein Sinterlamellenfilter oder ein Keramik-Filter ist.

8. Vorrichtung nach einem der Ansprüche 2 bis 7, dadurch gekennzeichnet, dass sie eine elektronische Schaltung enthält, die die Drehzal des Filters und des Vorabscheiders regelt.

9. Verwendung der Vorrichtung nach einem der Ansprüche 2 bis 8 zur Entrussung von Abgasen eines Dieselmotors.

10. Verwendung der Vorrichtung nach einem der Ansprüche 2 bis 8 zur Heissgasfiltration, insbesondere zur Entstaubung heisser Rauchgase.
